# EUROPÄISCHE PATENTSCHRIFT

(11) **EP 3 616 578 B1**
(45) Veröffentlichungstag und Bekanntmachung des Hinweises auf die Patenterteilung: **29.09.2021**
(21) Anmeldenummer: 18191930.9
(22) Anmeldetag: 31.08.2018
(51) Int. Cl.: A47J 37/06

(54) **ELEKTRISCHER GRILL MIT ZWEI EINEN GRILLRAUM AUFSPANNENDEN GRILLPLATTEN**
ELECTRIC GRILL WITH TWO GRILL PLATES DELIMITING A GRILL AREA
GRILL ÉLECTRIQUE À DEUX PLAQUES DE GRILL DÉLIMITANT UN ESPACE DE GRILL

(43) Veröffentlichungstag der Anmeldung: 04.03.2020
(73) Patentinhaber: Vorwerk & Co. Interholding GmbH, 42275 Wuppertal (DE)
(72) Erfinder: Büning, Thomas, 44795 Bochum (DE); Helmich, Martin, 47055 Duisburg (DE)
(74) Vertreter: Müller, Enno

(56) Entgegenhaltungen:
- EP-A1- 1 714 595
- EP-A2- 1 913 853
- WO-A1-2014/144313
- WO-A1-2017/120293
- US-A- 3 746 837

## Beschreibung

### Gebiet der Technik

Die Erfindung betrifft einen elektrischen Grill mit zwei sich bezogen auf deren große Plattenflächen gegenüberliegenden, gemeinsam einen Grillraum aufspannenden Grillplatten, wobei der Grill eine erste Grillplatte zur Auflage von Grillgut und eine relativ zu der ersten Grillplatte verlagerbare zweite Grillplatte aufweist, und wobei jeder Grillplatte eine die Grillplatte halternde Plattenbasis zugeordnet ist, wobei zumindest eine Grillplatte mindestens ein verlagerbar an der Plattenbasis gehaltertes Plattensegment aufweist, welches in Abhängigkeit von einer Größe und /oder Form eines in den Grillraum eingebrachten Grillgutes automatisch relativ zu der dieses Plattensegment halternden Plattenbasis verlagerbar ist.

### Stand der Technik

Elektrische Grills der vorgenannten Art sind im Stand der Technik bekannt. Diese werden oft auch als Kontaktgrill bezeichnet, da zu grillendes Gargut auf zwei gegenüberliegenden Seiten von den Grillplatten kontaktiert und gegart wird. Zumeist ist eine der beiden Grillplatten, vorzugsweise die bezogen auf einen üblichen Betriebszustand obere Grillplatte, relativ zu der anderen Grillplatte verlagerbar, so wie dies beispielsweise auch von Sandwichtoastern, Waffeleisen und dergleichen bekannt ist.

Die Veröffentlichung US 3 746 837 A offenbart eine Erwärmungseinrichtung für Speisen, welche zwei gegenüberliegende Grillplatten mit jeweils einem relativ zu der zugeordneten Plattenbasis verlagerbaren Plattensegment aufweist. Die jeweilige Grillplatte besteht somit aus einem einzigen Plattensegment.

Das US-Design US D697360 S offenbart beispielsweise einen elektrischen Grill, welcher zwei sich gegenüberliegende Grillplatten aufweist, die jeweils von einer Plattenbasis gehaltert sind. Die beiden Plattenbasen sind über ein Scharnier relativ zueinander verlagerbar.

Nachteilig bei derartigen Grills ist, dass es bei Verwenden von unterschiedlich hohem Grillgut innerhalb des Grillraums zu einem unterschiedlichen Garergebnis kommt, beispielsweise so, dass ein erstes Grillgut bereits durchgegart ist, während ein zweites Grillgut noch halb roh ist. Des Weiteren kann es bei einem zu starken Aufpressen der oberen Grillplatte, beispielsweise zum Ausgleichen einer Höhendifferenz mehrerer gleichzeitig aufgelegter Grillgüter, zu einer Verformung des jeweils höheren Grillgutes kommen, was ebenfalls das Garergebnis beeinträchtigen kann. Zudem kann das Aufpressen zu einem Festbacken des Grillgutes an den Grillplatten führen.

### Zusammenfassung der Erfindung

Ausgehend von dem vorgenannten Stand der Technik ist es Aufgabe der Erfindung, einen elektrischen Grill zu schaffen, bei welchem sowohl einzelne, als auch unterschiedlich dicke Stücke Grillgut optimal gegrillt werden können.

Zur Lösung der vorgenannten Aufgabe wird vorgeschlagen, dass die Grillplatte mehrere relativ zueinander und relativ zu der jeweils zugeordneten Plattenbasis verlagerbare Plattensegmente aufweist.

Diese erfindungsgemäße Ausgestaltung ist besonders vorteilhaft, da mehrere Bereiche einer Grillplatte an die Dicke eines aufgelegten Grillgutes angepasst werden können. Somit ist es auch möglich, beispielsweise mehr als zwei Grillgüter mit unterschiedlicher Höhe optimal in dem elektrischen Grill zuzubereiten, wobei jedes Plattensegment automatisch und unabhängig von benachbarten Plattensegmenten auf eine optimale Plattenhöhe eingestellt werden kann, damit sich die gegenüberliegenden Plattensegmente optimal an das dazwischen platzierte Grillgut anlegen. Es ergibt sich somit die Funktion eines 3D-Nagelbretts mit einer Mehrzahl von bei Krafteinwirkung zurückweichenden Segmenten. Grundsätzlich reicht es aus, wenn nur eine der Grillplatten derartig verlagerbare Plattensegmente aufweist. Allerdings ist es auch möglich, dass beide gegenüberliegenden Grillplatten verlagerbare Plattensegmente aufweisen. Gemäß einer Ausführung kann nur die obere Grillplatte des elektrischen Grills derart segmentiert ausgeführt sein, so dass die Höhe des Grillraumes, d.h. die innenliegende Öffnungshöhe, über einen Teil oder die gesamte Fläche variiert werden kann. die untere Grillplatte kann ebenfalls segmentiert ausgeführt sein, dies ist wie zuvor erläutert jedoch nicht zwingend erforderlich. In einem geschlossenen Zustand des Grillraumes liegen sich die gegenüberliegenden Plattensegmente vorzugsweise in einem Rahmen der Plattenbasis auf, so dass der elektrische Grill auch bei Segmentierung der Grillplatte mit nur einem einzigen Handgriff geöffnet werden kann.

Die Höhe zumindest eines Teilbereiches einer Grillplatte kann an die Höhe eines zu garenden Grillgutes angepasst werden. Es ist in diesem Sinne beispielsweise möglich, dass eine Grillplatte ein relativ zu der Plattenbasis feststehendes Plattensegment und ein verlagerbar an der Plattenbasis gehaltertes Plattensegment aufweist. Darüber hinaus kann auch eine andere, durch ein einziges Plattensegment gebildete Grillplatte insgesamt relativ zu der Plattenbasis verlagert werden, so dass die Höhe des Plattensegmentes sowohl bei der Auflage eines relativ dünnen, als auch bei der Auflage eines dickeren Stückes Grillgut auf die Grillplatte so angepasst werden kann, dass der Grillraum stets optimal geschlossen ist. Bei einer Ausbildung, bei welcher ein erstes Plattensegment relativ zu einem zweiten Plattensegment verlagerbar ist, wird vorteilhaft erreicht, dass mehrere in dem Grillraum befindliche Gargüter gleichermaßen bündig und mit vorzugsweise homogen angreifendem Druck der Grillplatte gehalten werden.

Es kann vorgesehen sein, dass die Plattenbasis topfförmig ausgebildet ist, wobei das Plattensegment zumindest teilweise in die Plattenbasis hinein verlagerbar ist. Unter topfförmig werden Formen verstanden, die dreidimensionale Räume einseitig offen begrenzen. Durch diese Ausgestaltung kann ein Teilbereich der Grillplatte in die Plattenbasis hineinragen und ein weiterer Teilbereich ggf. über eine Öffnungsebene der Grillplattenbasis hervorstehen, nämlich in Richtung der jeweils gegenüberliegenden Grillplatte bzw. Plattenbasis. Die Plattenbasis kann vorzugsweise zur Führung eines oder mehrerer verlagerbarer Plattensegmente dienen. Insbesondere kann es auch vorgesehen sein, dass ein innerer Randbereich der Plattenbasis Führungen für die Verlagerungsbewegung eines Plattensegmentes bereitstellt. Des Weiteren kann es auch vorgesehen sein, dass ein Plattensegment oder mehrere Plattensegmente in einer geöffneten Stellung des Grillraumes über einen Rand der topfförmigen Grillplattenbasis hinausragen und durch den Schließvorgang, d.h. das Aneinanderführen der gegenüberliegenden Plattenbasen, in die zugeordnete Plattenbasis hineinverlagert werden. Dies kann entweder durch Kontakt der gegenüberliegenden Grillplatten verursacht sein, oder durch eine Anlage eines oder mehrerer Plattensegmente an einem Grillgut. Vorzugsweise wird der Grillraum durch die aneinanderliegenden Grillplattenbasen und/oder Grillplatten so geschlossen, dass aus dem Grillgut austretende Flüssigkeiten aufgefangen und gezielt abgeleitet werden können, sowie eine optimale Temperatur für den Garprozess bereitgestellt werden kann.

Des Weiteren wird vorgeschlagen, dass dem Plattensegment ein Rückstellelement zugeordnet ist, welches das Plattensegment elastisch an der Plattenbasis lagert. Jedem Plattensegment kann beispielsweise ein Federelement zugeordnet sein, welches durch eine angreifende Kraft gespannt werden kann. Sofern sich zwischen den Grillplatten beispielsweise ein Grillgut befindet, das eine definierte Schließstellung des Grillraums verhindert, oder über die Ebenen anderer Grillgüter hervorsteht, wird das Plattensegment gegen die Rückstellkraft des Federelementes verlagert, bis die angreifende Kraft nachlässt, weil der Überstand des betreffenden Grillgutes beseitigt ist. Die Federelemente können beispielsweise Spiralfedern, Blattfedern oder ähnliche Federelemente sein. Darüber hinaus ist es auch möglich, das Plattensegment auf einem Körper aus einem federelastischen Material zu lagern oder das Plattensegment selbst aus einem federelastischen Material auszubilden. Die elastische Lagerung der Plattensegmente, d.h. das Aufbringen einer Vorspannkraft auf die Plattensegmente, sorgt dafür, dass die Plattensegmente in eine vorgelagerte Ausgangsstellung zurückverlagert werden, wenn keine Kraft mehr an den Plattensegmenten angreift, d.h. der Grillraum geöffnet ist und/oder kein Grillgut an dem jeweiligen Plattensegment anliegt und/oder die aufgelegten Grillgüter gleiche Dicken aufweisen, so dass die Grillplatten bei Schließen des Grillraums in einer gleichen Höhenebene an den Grillgütern anliegen.

Des Weiteren kann vorgesehen sein, dass ein Plattensegment der zweiten Grillplatte aufgrund einer an dem Plattensegment angreifenden Schwerkraft relativ zu der zugeordneten Plattenbasis verlagerbar ist. Die zweite, d.h. obere, Grillplatte kann somit alternativ oder zusätzlich zu einer Rückstellung der Plattensegmente durch ein Federelement, beispielsweise auch Plattensegmente aufweisen, die so an der Plattenbasis gelagert sind, dass diese der Schwerkraft folgend nach unten fallen, wenn die Grillplatte im Wesentlichen horizontal orientiert ist, d.h. die Plattensegmente innerhalb der Plattenbasis senkrecht nach unten zeigen. Ausgehend von einer geöffneten Stellung des Grillraums kann eine frühzeitige horizontale Stellung der oberen Grillplatte durch eine Scharnierlösung zwischen den beiden Plattenbasen erreicht werden, welche die Plattenbasen nicht nur über eine einzige Drehachse miteinander verbindet, sondern einen Hebel mit zwei verschiedenen Drehachsen aufweist, so dass die obere Grillplatte unabhängig von einer aktuellen Stellung während eines Schließvorgangs frühzeitig oder stets parallel zu der unteren Plattenbasis ausgerichtet sein kann. Eine solche Schließmechanik ist im Übrigen verglichen mit einer Verbindung mit nur einer einzigen Drehachse deswegen vorteilhaft, weil das in dem Grillraum befindliche Grillgut nicht zunächst einseitig, d.h. von der Scharnierseite aus, zusammengequetscht wird. Vielmehr kann der Druck der oberen Grillplatte homogen auf das Grillgut aufgebracht werden.

Es wird vorgeschlagen, dass ein Plattensegment eine Kontaktfläche für Grillgut bereitstellt, deren Flächengröße einen Betrag von 1 mm² bis 1000 cm², insbesondere 20 mm² bis 200 cm², aufweist. Die Grillplatte kann somit eine Vielzahl von nadelförmigen Plattensegmenten aufweisen, welche nach der Art eines Nagelbretts nebeneinanderliegen und gegen das Grillgut drücken. Die Grillplatte kann alternativ oder zusätzlich auch Plattensegmente aufweisen, welche geeignet sind, Grillgut üblicher Flächengröße, beispielsweise Fleischstücke, Gemüse und dergleichen, vollständig und ohne Mitwirkung benachbarter Plattensegmente aufzunehmen. Abhängig von der gewählten Größe des einzelnen Plattensegmentes kann die Grillplatte so ausgebildet sein, dass sich die Grillplatte durch eine Mehrzahl von Plattensegmenten an die Flächenkontur eines Grillgutes anpasst, so dass die Fläche der jeweiligen Grillplatte optimal zur Auflage von Grillgut genutzt werden kann. Insbesondere ist es auch möglich, dass die Plattensegmente einer Grillplatte unterschiedliche Größen aufweisen, so dass es Flächenbereiche geben kann, welche größere oder kleinere Plattensegmente aufweisen als andere Flächenbereiche. Somit kann ein Teilbereich der Grillplatte für die Auflage von großem Grillgut genutzt werden, während andere Plattensegmente zur Auflage von demgegenüber kleinerem Grillgut vorteilhaft sind. Die angegebenen Flächengrößen für die Plattensegmente sind hier als vorzugsweise vorgeschlagen, wobei ein Betrag von 1 mm² eine Flächengröße bezeichnet, wie sie bei Nadelspitzen üblich sind, so dass eine Kontur eines Grillguts besonders präzise abgeformt werden kann. Die angegebenen Flächengrößen von bis zu ca. 1000 cm² geben demgegenüber größere Teilbereiche einer Grillplatte an, welche als ein einziges Plattensegment ausgestaltet sind. In einem Fall kann die Grillplatte beispielsweise auch als Ganzes, d.h. als ein einziges Plattensegment, relativ zu der zugeordneten Plattenbasis verlagerbar sein. Die Grillplatte kann vorzugsweise je nach der Größe des aufgelegten Grillguts als Ganzes in eine topfförmige Plattenbasis eingefahren werden, um ein bündiges Schließen des Grillraumes zu ermöglichen. Vorzugsweise bieten sich Flächengrößen eines Plattensegmentes zwischen 20 mm² und 200 cm² an, was ungefähr den Flächengrößen üblicher Grillgüter wie Fleischstücke, Gemüsestücke oder ähnlichem entspricht.

In diesem Zusammenhang kann auch vorgesehen sein, dass eine Grillplatte ein Plattensegment bis eintausend Plattensegmente aufweist. Insbesondere kann die Grillplatte zwei bis einhundert Plattensegmente aufweisen, besonders bevorzugt zwei bis zehn Plattensegmente. Je nach der Größe des elektrischen Grills ergeben sich abhängig von der Anzahl der Plattensegmente pro Grillplatte dann auch unterschiedlich große Flächen der Plattensegmente. Insgesamt ist die Anzahl der Plattensegmente und deren Größe aufeinander abzustimmen, wobei wie zuvor erläutert Ausführungsformen möglich sind, bei welchen unterschiedliche Flächenbereiche einer Grillplatte unterschiedlich große und unterschiedlich viele Plattensegmente aufweisen.

Es kann vorgesehen sein, dass eine Grillplatte zumindest zwei Plattensegmente aufweist, wobei jedem der beiden Plattensegmente eine eigene Heizeinrichtung zugeordnet ist, wobei die Heizeinrichtungen der Plattensegmente in Bezug auf einen Betriebsstatus und/oder eine Heizleistung und/oder eine Heizdauer unabhängig voneinander steuerbar sind. Durch diese Ausgestaltung kann die Temperatur eines Plattensegmentes individuell und unabhängig von der Temperatur anderer Plattensegmente eingestellt werden. Beispielsweise kann jedem Plattensegment oder auch einer Gruppe mehrerer Plattensegmente ein Heizelement zugeordnet sein, welches individuell bestromt werden kann. Auf diese Weise können unterschiedliche Heizleistungen und/oder verschiedene Temperaturverläufe und damit auch verschiedene Garpunkte verschiedener Gargüter berücksichtigt werden. Besonders vorzugsweise können sowohl die Plattensegmente der ersten Grillplatte als auch die Plattensegmente der zweiten Grillplatte unabhängig voneinander geheizt werden. Dies betrifft beispielsweise deren Betriebsstatus, d.h. beispielsweise einen aktuellen An-/AusZustand, eine Heizleistung oder eine Heizdauer, welche für ein eine gewisse Dicke aufweisendes Gargut vorgesehen ist. Die Heizeinrichtung eines Plattensegmentes kann manuell durch einen Nutzer geschaltet werden, indem dieser beispielsweise bestimmte Flächenbereiche der Grillplatte anschaltet und andere, welche aufgrund der Menge und Größe des Grillguts nicht benötigt werden, ausgeschaltet lässt. Alternativ kann eine Heizeinrichtung auch automatisiert gesteuert werden, beispielsweise durch einen Kontaktsensor und/oder eine Wägeeinrichtung, welche die Anwesenheit und/oder ein Gewicht und/oder ein Volumen und/oder eine Größe des Garguts messen bzw. abschätzen.

In diesem Zusammenhang wird vorgeschlagen, dass einem Plattensegment ein Sensor zur Detektion einer Verlagerung oder eines Verlagerungszustandes des Plattensegmentes oder zur Detektion einer Anwesenheit von Grillgut an einer Kontaktfläche des Plattensegmentes zugeordnet ist. Der Sensor kann in einem einfachen Fall als Kontaktsensor ausgebildet sein, welcher bei Detektion eines Kontakts auf eine Anwesenheit von Grillgut an dem jeweiligen Plattensegment schließt. Des Weiteren kann der Sensor auch eine Verlagerung, d.h. eine sich ändernde Höhe des Plattensegmentes relativ zu einer Plattenbasis detektieren oder eine Verlagerungsbewegung durch beispielsweise eine Beschleunigungssensor, einen sich ändernden Widerstand oder dergleichen.

Des Weiteren ist es besonders vorteilhaft, wenn der elektrische Grill eine Steuereinrichtung aufweist, die eingerichtet ist, eine einem Plattensegment zugeordnete Heizeinrichtung in Abhängigkeit von einem Detektionsergebnis des Sensors zu steuern. Gemäß dieser Ausgestaltung schaltet die Steuereinrichtung diejenige Heizeinrichtung an, welche einem aktuell benötigten oder mehreren Plattensegmenten zugeordnet ist. Plattensegmente, auf welchen aktuell kein Grillgut platziert ist, bleiben demgegenüber ausgeschaltet. Dies reduziert den Stromverbrauch für den Betrieb des elektrischen Grills. Des Weiteren kann die Steuereinrichtung auch die Höhe eines aufliegenden Grillgutes ermitteln, indem beispielsweise ein Abstand zwischen gegenüberliegenden Plattensegmenten des Grillraumes ermittelt wird. Des Weiteren kann die Steuereinrichtung für die Einstellung der Heizleistung bzw. die Einstellung einer voraussichtlichen Heizdauer auch eine Information über die Art eines Gargutes, dessen Garpunkt und dergleichen berücksichtigen, so dass unterschiedliche Gargüter zum gleichen Zeitpunkt einen optimalen Garpunkt erreichen und somit gleichzeitig serviert werden können. Gegebenenfalls kann ein Nutzer der Steuereinrichtung Informationen über die Art des Grillgutes und/oder dessen Gewicht oder dergleichen übermitteln. Des Weiteren kann die Steuereinrichtung auch eine Warmhaltefunktion oder einen Wartemodus steuern, der geschaltet wird, wenn ein Gargut fertiggegart ist. Somit können beispielsweise Grillgüter warmgehalten werden, bis andere Gerichte fertig sind.

Schließlich wird vorgeschlagen, dass eine der Grillplatten bezogen auf einen geschlossenen Zustand des Grillraumes mit einem Randbereich über die andere Grillplatte und/oder die Plattenbasis hervorsteht, so dass in dem Grillraum vorhandene Flüssigkeit ausströmen kann. Es kann vorgesehen sein, dass die erste, d.h. untere Grillplatte über die obere zweite Grillplatte hervorsteht. Die hervorstehende Grillplatte dient für ein optimales Ablaufen von Flüssigkeiten aus dem Grillraum. Durch den Überstand einer der Grillplatten bildet sich ein Spalt zwischen diesen. Dem Spalt kann ein Auffangbehälter zugeordnet sein, in welchen die Flüssigkeit entsprechend überführt wird.

### Kurze Beschreibung der Zeichnungen

Im Folgenden wird die Erfindung anhand von Ausführungsbeispielen näher erläutert. Es zeigen:
- Fig. 1: einen erfindungsgemäßen Grill gemäß einer ersten Ausführungsform,
- Fig. 2: eine Draufsicht auf den Grill in einem geschlossenen Zustand,
- Fig. 3: einen Schnitt durch den geschlossenen Grill,
- Fig. 4: einen zu Fig. 3 orthogonalen Schnitt des Grills,
- Fig. 5: eine Prinzipskizze zueinander verlagerbarer Plattensegmente des Grills,
- Fig. 6: eine weitere geschnittene Ansicht des Grills,
- Fig. 7: einen erfindungsgemäßen Grill gemäß einer zweiten Ausführungsform,
- Fig. 8: einen Schnitt durch den Grill gemäß Fig. 7,
- Fig. 9: eine Prinzipskizze mit relativ zueinander verlagerbaren Plattensegmenten,
- Fig. 10: den Grill in einem geschlossenen Zustand,
- Fig. 11: eine Seitenansicht des Grills in einem geöffneten Zustand,
- Fig. 12: eine Seitenansicht des Grills in einem geschlossenen Zustand.

### Beschreibung der Ausführungsformen

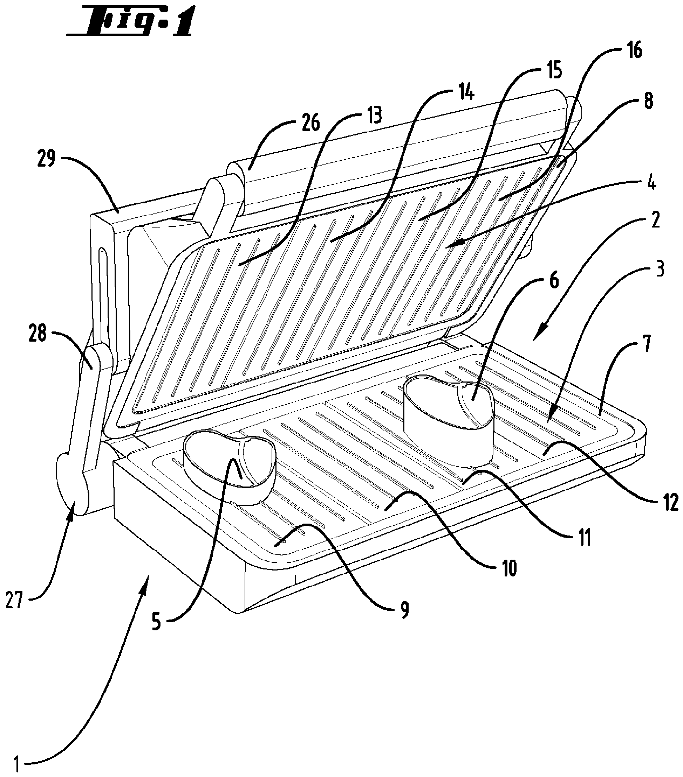

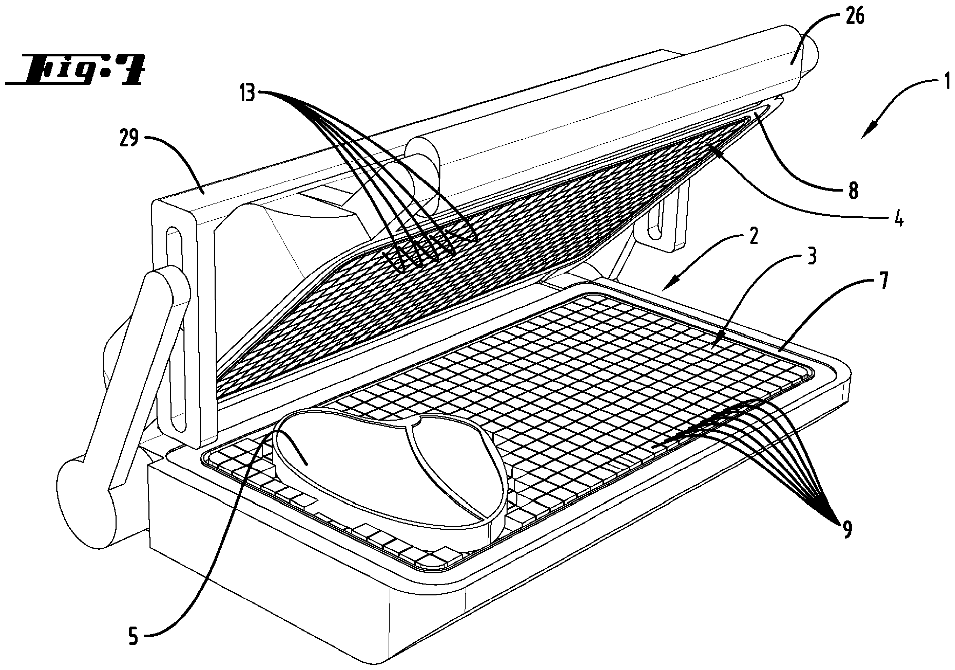

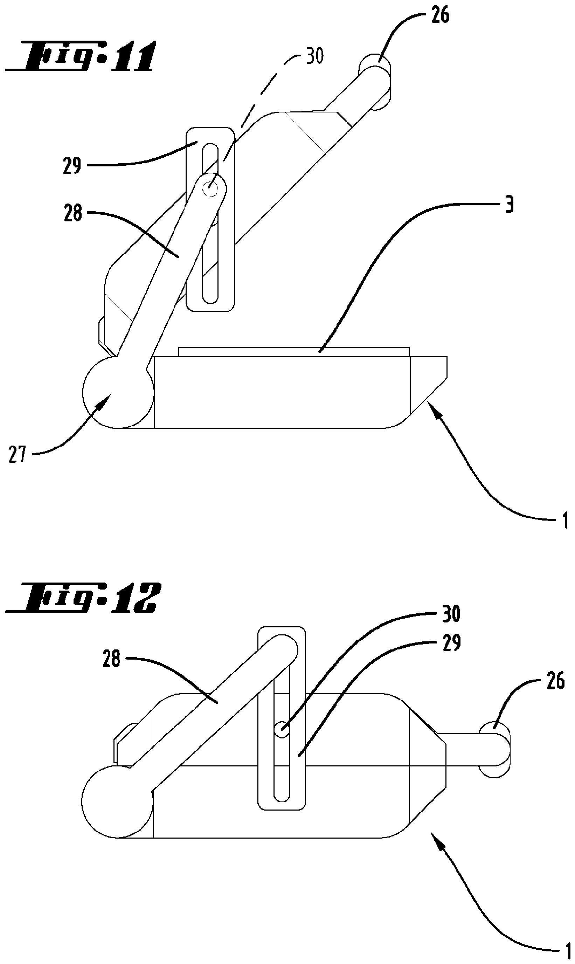

Die Figuren zeigen lediglich beispielhaft unterschiedliche mögliche Ausführungsformen eines erfindungsgemäßen Grills, wobei die Figuren 1 bis 6 eine erste Ausführungsform betreffen und die Figuren 7 bis 12 eine zweite Ausführungsform betreffen. Es sind selbstverständlich auch weitere erfindungsgemäße Ausführungsformen denkbar, wobei die hier getroffene Auswahl nicht beschränkend zu verstehen ist.

Der in Fig. 1 dargestellte Grill 1 weist zwei gegenüberliegende Grillplatten 3, 4 auf. Jede der Grillplatten 3, 4 ist in einer Plattenbasis 7, 8 gehaltert, wobei die Plattenbasen 7, 8 durch eine Mechanik mit einem Scharnier 27 relativ zueinander verlagerbar sind. Das Scharnier 27 weist einen Hebel 28 auf, welcher in eine an einer gegenüberliegenden Grillplatte 4 gehalterte Führung 29 eingreift. In diese Führung 29 greift ebenfalls ein Führungselement 30 der Grillplatte 4 ein. Die Scharniermechanik ermöglicht eine Bewegung der oberen Grillplatte 4 relativ zu zwei verschiedenen Rotationsachsen, so dass die obere Grillplatte 4 relativ zu der unteren Grillplatte 3 nicht nur verschwenkt, sondern auch linear verlagert werden kann. Die beiden gegenüberliegenden Grillplatten 3, 4 spannen zwischen sich einen Grillraum 2 auf, in welchen Grillgut 5, 6 eingebracht ist. Hier befinden sich zwei Grillgüter 5, 6 innerhalb des Grillraumes 2, wobei ein erstes Grillgut 5 eine andere Höhe aufweist als ein zweites Grillgut 6.

Die Grillplatten 3, 4 weisen mehrere Plattensegmente 9 bis 16 auf, wobei die untere Grillplatte 3 vier Plattensegmente 9 bis 12 aufweist, und wobei die obere Grillplatte 4 ebenfalls vier Plattensegmente 13 bis 16 aufweist. Die Plattensegmente 9 bis 12 der unteren Grillplatte 3 sind relativ zu der zugeordneten Plattenbasis 7 ortsfest, während die Plattensegmente 13 bis 16 der oberen Grillplatte 4 relativ zu deren Plattenbasis 8 verlagert werden können, nämlich in die Plattenbasis 8 hinein, was hier beispielsweise einer Verlagerungsbewegung orthogonal zu der Plattenebene der Plattenbasis 8 entspricht. Die obere Grillplatte 4 kann relativ zu der unteren Grillplatte 3 verlagert werden, indem ein Nutzer an einem an der oberen Grillplatte 4 ausgebildeten Griff 26 angreift und die obere Grillplatte 4 in eine gewünschte Stellung verlagert.

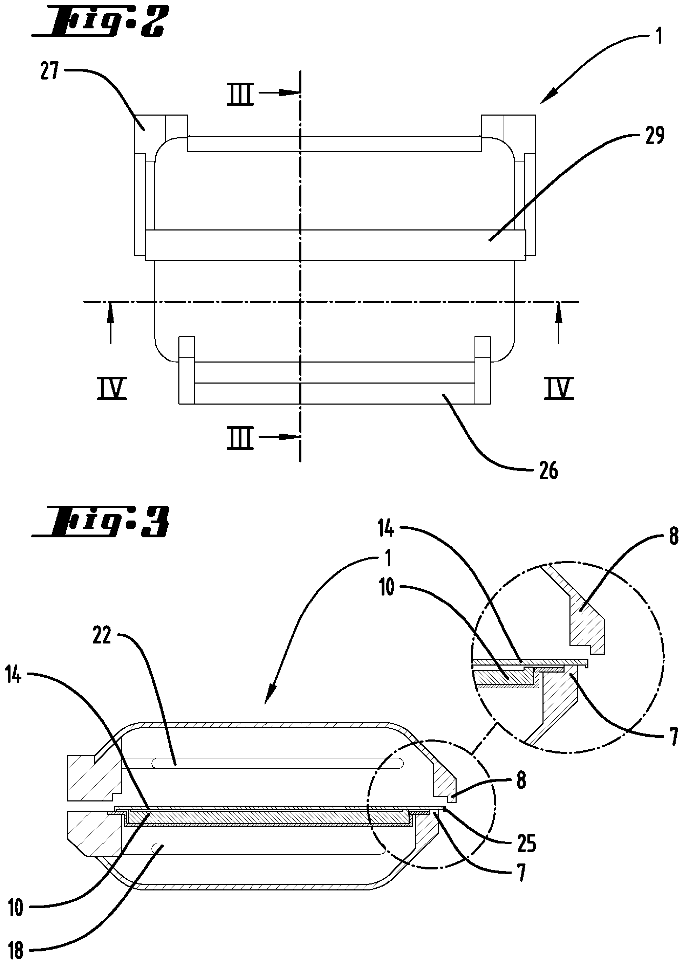

Fig. 2 zeigt eine Draufsicht auf den in Fig. 1 gezeigten Grill 1. Zu erkennen ist, dass der Griff 26 über die Kontur des Grills 1 hervorsteht, so dass der Nutzer beim Angreifen an dem Griff 26 nicht in Kontakt mit beispielsweise der oberen Grillplatte 4 gelangen kann und auch bei einem Öffnen des Grillraums 2 keine Hitzeeinwirkung erleidet.

Fig. 3 zeigt eine geschnittene Ansicht des Grills 1 gemäß der in Fig. 2 bezeichneten Schnittlinie III. Der Grill 1 ist in einer senkrechten Ebene geschnitten, welche die gegenüberliegenden Plattensegmente 10 und 14 der unteren bzw. oberen Grillplatten 3, 4 schneidet. Die Plattenbasis 8 der oberen Grillplatte 4 und damit auch das Plattensegment 14 der oberen Grillplatte 4 ist länger ausgebildet als die untere Plattenbasis 7 bzw. das untere Plattensegment 10. Dadurch greift ein Randbereich 25 des oberen Plattensegmentes 14 über die untere Plattenbasis 7 hervor, so dass in dem Grillraum 2 vorhandene Flüssigkeit, welche durch die darin befindlichen Grillgüter 5, 6 bedingt ist, aus dem Grillraum 2 herausfließen bzw. abgeführt werden kann. Zum Auffangen der Flüssigkeit kann eine hier nicht dargestellte Flüssigkeitsauffangeinrichtung vorgesehen sein, beispielsweise ein Behälter, welcher neben der unteren Plattenbasis 7 platziert wird.

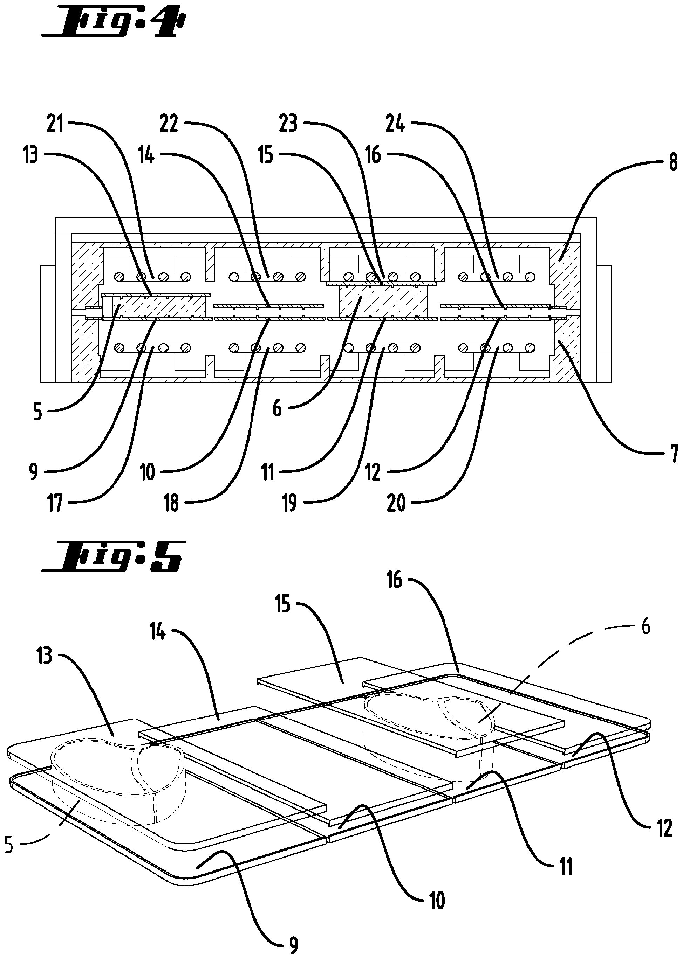

Fig. 4 zeigt einen Schnitt durch den Grill 1 gemäß der in Fig. 2 dargestellten Linie IV. Der Grillraum 2 ist mit den beiden unterschiedlich hohen Grillgütern 5, 6 bestückt, wobei ein erstes Grillgut 5 zwischen den Plattensegmenten 9 und 13 der unteren bzw. oberen Grillplatte 3, 4 liegt, und wobei ein zweites, dickeres Grillgut 6 zwischen den Plattensegmenten 11 und 15 der unteren bzw. oberen Grillplatte 3, 4 liegt. Die anderen Plattensegmente 10, 12, 14, 16 weisen kein Grillgut auf. Jedem der Plattensegmente 9 bis 16 ist eine eigene Heizeinrichtung 17 bis 24 zugeordnet. Jede der Heizeinrichtungen 17 bis 24 kann unabhängig von den anderen Heizeinrichtungen 17 bis 24 geschaltet werden. Hier sind die Heizeinrichtungen 17 bis 24 beispielsweise als Heizwiderstände ausgebildet. Der Grill 1 weist eine Steuereinrichtung auf, welche eingerichtet ist, die Heizeinrichtungen 17 bis 24 zu schalten. Die Plattensegmente 13 und 15 der oberen Grillplatte 4 sind in Fig. 4 korrespondierend zu den Dicken der aufgelegten Grillgüter 5, 6 verlagert. Die den Plattensegmenten 13 bis 16 der oberen Grillplatte 4 zugeordnete Plattenbasis 8 ist im Wesentlichen topfförmig ausgebildet, so dass die Plattensegmente 13 bis 16 in die obere Plattenbasis 8 hinein verlagert werden können. Die Plattensegmente 9 bis 12 der unteren Grillplatte 3 sind hingegen ortsfest an der unteren Plattenbasis 7 angeordnet und verlagern sich nicht bei Kontakt mit dem jeweiligen Grillgut 5, 6. Der Abstand zwischen den gegenüberliegenden Plattensegmenten 9 und 13 entspricht der Höhe des Grillgutes 5. Der Abstand der gegenüberliegenden Plattensegmente 11 und 15 entspricht der Höhe des dazwischenliegenden Grillgutes 6. Hier sind die oberen Plattensegmente 13 bis 16 beispielsweise schiebebeweglich an der Plattenbasis 8 gelagert, so dass es bei Kontakt der Plattensegmente 13 bis 16 mit dem Grillgut 5, 6 zu einer Höhenverlagerung relativ zu der Plattenbasis 8 kommt. Den oberen Plattensegmenten 13, 16 kann vorzugsweise eine hier nicht dargestellte Sensorik zugeordnet sein, welche die Anwesenheit eines Grillgutes 5, 6 erkennt und die den jeweiligen Plattensegmenten 9, 11, 13, 15 zugeordneten Heizeinrichtungen 17, 19, 21, 23 steuert. Beispielsweise kann ein den Plattensegmenten 9, 11, 13, 15 zugeordneter Kontaktsensor erkennen, dass eine Kraft auf die Plattensegmente 9, 11, 13, 15 ausgeübt wird. Die Steuereinrichtung schließt daraufhin, dass an den Plattensegmenten 9 und 13 bzw. 11 und 15 ein Grillgut 5, 6 anliegt und schaltet die den Plattensegmenten 9, 11, 13, 15 zugeordneten Heizeinrichtungen 17, 19, 21, 23 an. Es kann vorgesehen sein, dass eine weitere Sensorik, beispielsweise eine den unteren Plattensegmenten 9 bis 12 zugeordnete Wägeeinrichtung das Gewicht der Grillgüter 5, 6 misst und dementsprechend eine Temperatur und/oder Heizdauer oder andere Parameter des Garvorgangs steuert. Durch die Verlagerbarkeit der Plattensegmente 13 bis 16 der oberen Grillplatte 4 kommt es stets zu einer beiderseitigen Anlage der Plattensegmente 9, 13 bzw. 10, 14, bzw. 11, 15, bzw. 12, 16 an einem dazwischen angeordneten Grillgut 5, 6. Dadurch wird vermieden, dass ein erstes Grillgut 5, welches eine geringere Höhe aufweist als ein zweites Grillgut 6, in Kontakt mit der oberen Grillplatte 4 gelangt. Vielmehr wird die Höhenposition der oberen Plattensegmente 13 bis 16 an die Höhe des jeweiligen Grillgutes 5, 6 angepasst, so dass ein homogener Garerfolg für unterschiedlich hohe Grillgüter 5, 6 sichergestellt werden kann.

Fig. 5 zeigt eine Prinzipskizze der segmentierten Grillplatten 3, 4, wobei die Höhenebenen der verlagerten oberen Plattensegmente 13, 15 erkennbar sind.

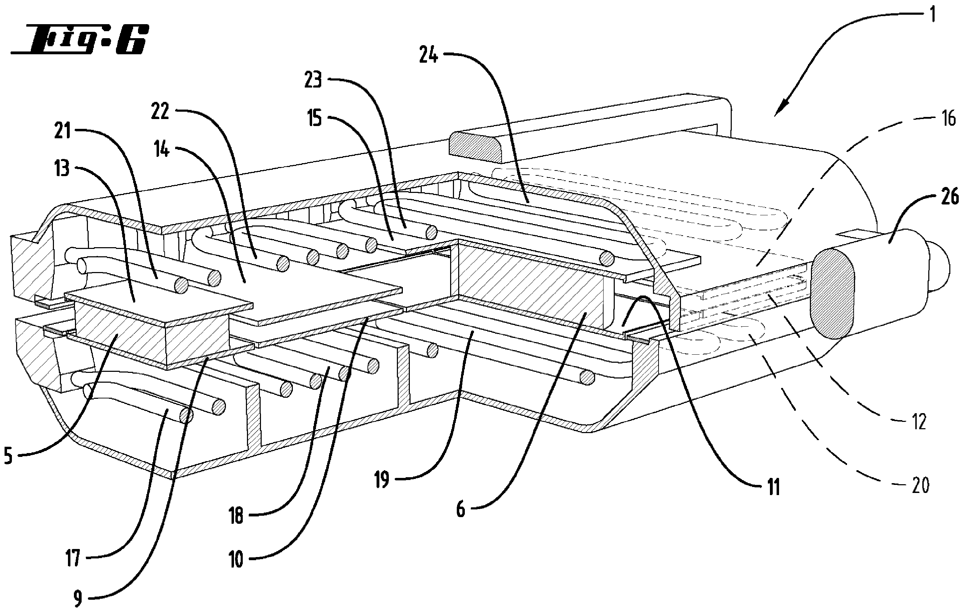

Fig. 6 zeigt eine dreidimensionale Schnittdarstellung des Grills 1, welche den Aufbau des Grills 1 weiter verdeutlicht. Zu erkennen sind die verschiedenen Höhenebenen der Plattensegmente 9 bis 16 der beiden Grillplatten 3, 4 sowie die den Plattensegmenten 9 bis 16 zugeordneten Heizeinrichtungen 17 bis 24. Alternativ zu der hier gezeigten Ausführungsform kann es selbstverständlich auch vorgesehen sein, dass eine Heizeinrichtung 17 bis 24 mehrere Plattensegmente 9 bis 16 gleichzeitig heizt, oder dass mehrere Heizeinrichtungen 17 bis 24 ein bestimmtes Plattensegment 9 bis 16 heizen.

Die Figuren 7 bis 11 zeigen einen zweiten erfindungsgemäßen Grill 1, bei welchem beide Grillplatten 3, 4 eine sehr große Vielzahl von Plattensegmenten 9 bzw. 13 aufweisen. Die Plattensegmente 9, 13 sind hier im Vergleich zu den Plattensegmenten 9 bis 16 gemäß der zuvor in den Figuren 1 bis 6 dargestellten Ausführungsform wesentlich kleiner. Durch die kleinere Fläche der einzelnen Plattensegmente 9, 13 kann die Kontur eines innerhalb des Grillraums 2 befindlichen Grillgutes 5 wesentlich genauer nachgebildet werden, so dass die Fläche der Grillplatten 3, 4 ggf. platzsparender genutzt werden kann und an viele verschiedene Flächengrößen von Grillgut 5 angepasst werden kann. Die einzelnen Plattensegmente 9, 13 sind hier sowohl bezogen auf die untere Grillplatte 3, als auch bezogen auf die obere Grillplatte 4 alle relativ zu der jeweils zugeordneten Plattenbasis 7, 8 verlagerbar. Dabei kann die Verlagerbarkeit entweder durch Drücken des Grillgutes 5 gegen die jeweiligen Plattensegmente 9, 13 erreicht werden, wobei den Plattensegmenten 9 der unteren Plattenbasis 7 vorzugsweise ein Federelement zugeordnet ist, welches die unbelasteten Plattensegmente 9 in eine Ausgangsstellung zurückverlagert, die einer in Richtung der oberen Plattenbasis 8 verlagerten Stellung entspricht. Sofern ein Grillgut 5 auf die Plattensegmente aufgelegt wird, kann die Gewichtskraft des Grillgutes 5 bzw. die Gewichtskraft der gegenüberliegenden Plattensegmente 13 die Rückstellkraft des Federelementes überwinden, so dass diese in die untere Plattenbasis 7 hineinverlagert werden. Die Plattensegmente 13 der oberen Grillplatte 4 können vorzugsweise zumindest unterstützend durch die an den Plattensegmenten 13 angreifende Gewichtskraft in Richtung der unteren Grillplatte 3 verlagert werden. Alternativ oder zusätzlich kann auch den oberen Plattensegmenten 13 jeweils ein Federelement zugeordnet sein, welches die Plattensegmente 13 in eine aus der topfförmigen Plattenbasis 8 heraus verlagerten Stellung positioniert.

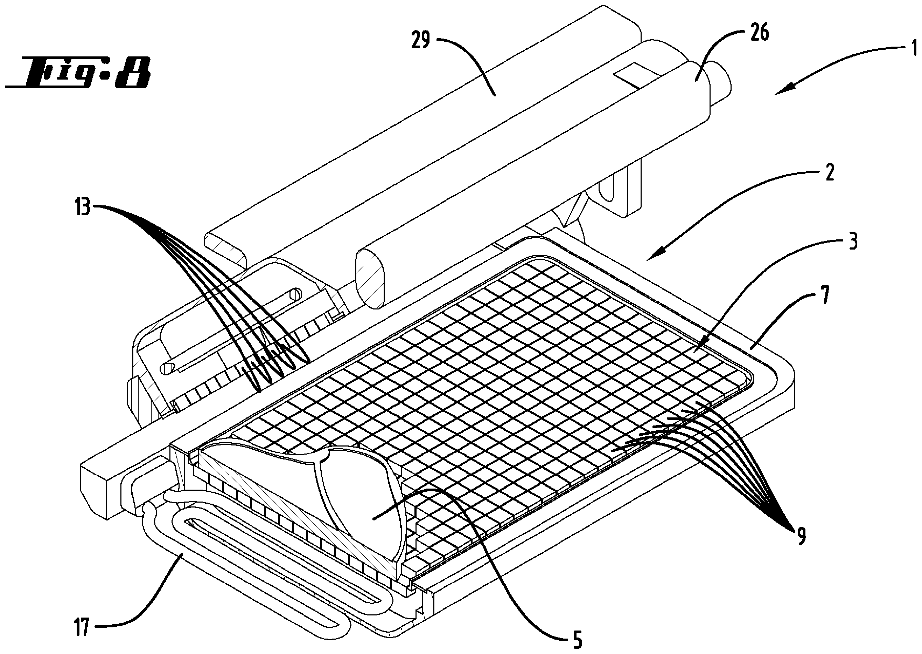

Fig. 8 zeigt einen Schnitt durch den Grill 1 gemäß Fig. 7. Erkennbar ist wiederum eine Heizeinrichtung 17, welche den Plattensegmenten 9 zugeordnet ist. In gleicher Art und Weise kann auch die obere Grillplatte 4 eine Heizeinrichtung 21 aufweisen. Hier sind beispielsweise eine Vielzahl von Plattensegmenten 9 einer gemeinsamen Heizeinrichtung 17 zugeordnet. Es kann jedoch auch vorgesehen sein, jedem Plattensegment 9 eine eigene Heizeinrichtung 17 zuzuordnen. Eine Steuereinrichtung des Grills 1 kann beispielsweise ausgebildet sein, um einen Kontakt der Plattensegmente 9, 13 durch ein Grillgut 5 zu erkennen und eine ortskorrespondierende Heizeinrichtung 17, 21 einzuschalten.

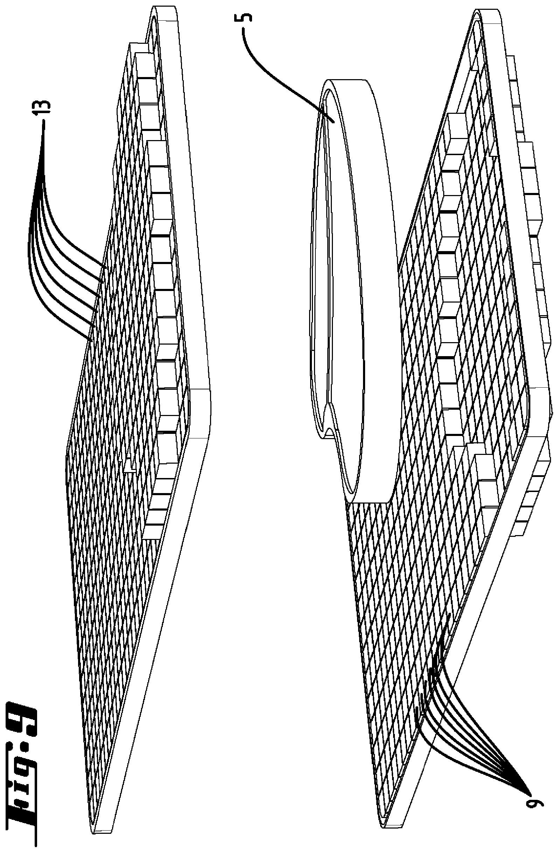

Fig. 9 zeigt eine Prinzipskizze der Grillplatten 3, 4, deren Plattensegmente 9, 13 an eine Form, insbesondere Außenkontur und Dicke, eines Grillgutes 5 angepasst sind. Je kleiner die Kontaktfläche der Plattensegmente 9, 13 ist, desto genauer kann die Kontur des Grillgutes 5 nachgebildet werden.

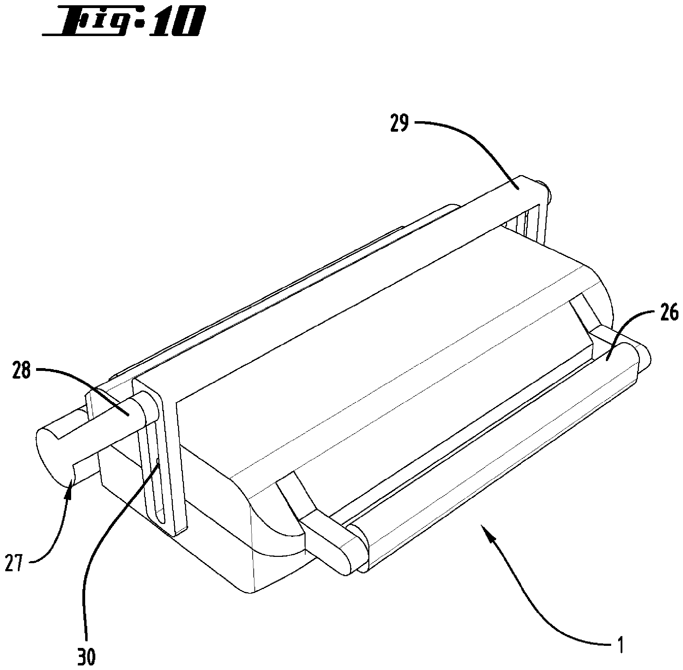

Die Figuren 10 bis 12 zeigen den Grill 1 schließlich in verschiedenen Ansichten in sowohl geschlossenem als auch geöffnetem Zustand. Der Grill 1 weist hier zwei Plattenbasen 7, 8 auf, welche hier beispielsweise zueinander bündig abschließen. Zum Auslassen von Flüssigkeit aus dem Grillraum 2 kann gemäß dieser Ausführungsform beispielsweise eine hier nicht dargestellte Öffnung an der unteren Plattenbasis 7 vorgesehen sein. Die beiden Plattenbasen 7, 8 sind darüber hinaus, wie auch bei der ersten Ausführungsform gemäß den Figuren 1 bis 6, durch eine Scharniermechanik miteinander verbunden, die eine Beweglichkeit der oberen Grillplatte 4 relativ zu der unteren Grillplatte 3 erlaubt.

**Liste der Bezugszeichen**

| | | | |
|---|---|---|---|
| 1 | Grill | 27 | Scharnier |
| 2 | Grillraum | 28 | Hebel |
| 3 | Grillplatte | 29 | Führung |
| 4 | Grillplatte | 30 | Führungselement |
| 5 | Grillgut | | |
| 6 | Grillgut | | |
| 7 | Plattenbasis | | |
| 8 | Plattenbasis | | |
| 9 | Plattensegment | | |
| 10 | Plattensegment | | |
| 11 | Plattensegment | | |
| 12 | Plattensegment | | |
| 13 | Plattensegment | | |
| 14 | Plattensegment | | |
| 15 | Plattensegment | | |
| 16 | Plattensegment | | |
| 17 | Heizeinrichtung | | |
| 18 | Heizeinrichtung | | |
| 19 | Heizeinrichtung | | |
| 20 | Heizeinrichtung | | |
| 21 | Heizeinrichtung | | |
| 22 | Heizeinrichtung | | |
| 23 | Heizeinrichtung | | |
| 24 | Heizeinrichtung | | |
| 25 | Randbereich | | |
| 26 | Griff | | |

## Patentansprüche

1. Elektrischer Grill (1) mit zwei sich bezogen auf deren große Plattenflächen gegenüberliegenden, gemeinsam einen Grillraum (2) aufspannenden Grillplatten (3, 4), wobei der Grill (1) eine erste Grillplatte (3) zur Auflage von Grillgut (5, 6) und eine relativ zu der ersten Grillplatte (3) verlagerbare zweite Grillplatte (4) aufweist, und wobei jeder Grillplatte (3, 4) eine die Grillplatte (3, 4) halternde Plattenbasis (7, 8) zugeordnet ist, wobei zumindest eine Grillplatte (3, 4) mindestens ein verlagerbar an der Plattenbasis (7, 8) gehaltertes Plattensegment (9 bis 16) aufweist, welches in Abhängigkeit von einer Größe und/oder Form eines in den Grillraum (2) eingebrachten Grillgutes (5, 6) automatisch relativ zu der dieses Plattensegment (9 bis 16) halternden Plattenbasis (7, 8) verlagerbar ist, **dadurch gekennzeichnet, dass** die Grillplatte (3, 4) mehrere relativ zueinander und relativ zu der jeweils zugeordneten Plattenbasis (7, 8) verlagerbare Plattensegmente (9 bis 16) aufweist.

2. Elektrischer Grill (1) nach Anspruch 1, **dadurch gekennzeichnet, dass** die Plattenbasis (7, 8) topfförmig ausgebildet ist, wobei das Plattensegment (9 bis 16) zumindest teilweise in die Plattenbasis (7, 8) hinein verlagerbar ist.

3. Elektrischer Grill (1) nach einem der vorhergehenden Ansprüche, **dadurch gekennzeichnet, dass** dem Plattensegment (9 bis 16) ein Rückstellelement zugeordnet ist, welches das Plattensegment (9 bis 16) elastisch an der Plattenbasis (7, 8) lagert.

4. Elektrischer Grill (1) nach einem der vorhergehenden Ansprüche, **dadurch gekennzeichnet, dass** ein Plattensegment (13 bis 16) der zweiten Grillplatte (4) aufgrund einer an dem Plattensegment (13 bis 16) angreifenden Schwerkraft relativ zu der zugeordneten Plattenbasis (8) verlagerbar ist.

5. Elektrischer Grill (1) nach einem der vorhergehenden Ansprüche, **dadurch gekennzeichnet, dass** ein Plattensegment (9 bis 16) eine Kontaktfläche für Grillgut bereitstellt, deren Flächengröße einen Betrag von 1 mm² bis 1000 cm², insbesondere 20 mm² bis 200 cm², aufweist.

6. Elektrischer Grill (1) nach einem der vorhergehenden Ansprüche, **dadurch gekennzeichnet, dass** eine Grillplatte (3, 4) ein Plattensegment (9 bis 16) bis eintausend Plattensegmente (9 bis 16), insbesondere zwei bis einhundert Plattensegmente (9 bis 16), besonders bevorzugt zwei bis zehn Plattensegmente (9 bis 16), aufweist.

7. Elektrischer Grill (1) nach einem der vorhergehenden Ansprüche, **dadurch gekennzeichnet, dass** eine Grillplatte (3,4) zumindest zwei Plattensegmente (9 bis 16) aufweist, wobei jedem der beiden Plattensegmente (9 bis 16) eine eigene Heizeinrichtung (17 bis 24) zugeordnet ist, wobei die Heizeinrichtungen (17 bis 24) der Plattensegmente (9 bis 16) in Bezug auf einen Betriebsstatus und/oder eine Heizleistung und/oder eine Heizdauer unabhängig voneinander steuerbar sind.

8. Elektrischer Grill (1) nach einem der vorhergehenden Ansprüche, **dadurch gekennzeichnet, dass** einem Plattensegment (9 bis 16) ein Sensor zur Detektion einer Verlagerung oder eines Verlagerungszustandes des Plattensegmentes (9 bis 16) oder zur Detektion einer Anwesenheit von Grillgut (5, 6) an einer Kontaktfläche des Plattensegmentes (9 bis 16) zugeordnet ist.

9. Elektrischer Grill (1) nach Anspruch 8 **gekennzeichnet durch** eine Steuereinrichtung, welche eingerichtet ist, eine einem Plattensegment (9 bis 16) zugeordnete Heizeinrichtung (17 bis 24) in Abhängigkeit von einem Detektionsergebnis des Sensors zu steuern.

10. Elektrischer Grill (1) nach einem der vorhergehenden Ansprüche, **dadurch gekennzeichnet, dass** eine der Grillplatten (3, 4) bezogen auf einen geschlossenen Zustand des Grillraums (2) mit einem Randbereich über die andere Grillplatte (4, 3) und/oder die Plattenbasis (8, 7) hervorsteht, so dass in dem Grillraum (2) vorhandene Flüssigkeit ausströmen kann.

## Claims

1. An electric grill (1) with two grill plates (3, 4), which lie opposite of one another referred to their large plate surfaces and jointly define a grilling space (2), wherein the grill (1) comprises a first grill plate (3) for supporting grillables (5, 6) and a second grill plate (4) that can be displaced relative to the first grill plate (3), wherein a plate base (7, 8) that holds the grill plate (3, 4) is assigned to each grill plate (3, 4), and wherein at least one grill plate (3, 4) comprises at least one plate segment (9 to 16), which is displaceably held on the plate base (7, 8) and can be automatically displaced relative to the plate base (7, 8) holding this plate segment (9 to 16) in dependence on a size and/or shape of a grillable (5, 6) introduced into the grilling space (2), **characterized in that** the grill plate (3, 4) comprises multiple plate segments (9 to 16), which can be displaced relative to one another and relative to the respectively associated plate base (7, 8).

2. The electric grill (1) according to claim 1, **characterized in that** the plate base (7, 8) is realized in a cup-shaped manner, wherein the plate segment (9 to 16) can be at least partially displaced into the plate base (7, 8).

3. The electric grill (1) according to one of the preceding claims, **characterized in that** a resetting element is assigned to the plate segment (9 to 16) and elastically supports the plate segment (9 to 16) on the plate base (7, 8).

4. The electric grill (1) according to one of the preceding claims, **characterized in that** a plate segment (13 to 16) of the second grill plate (4) can be displaced relative to the associated plate base (8) due to a gravitational force acting upon the plate segment (13 to 16).

5. The electric grill (1) according to one of the preceding claims, **characterized in that** a plate segment (9 to 16) provides a contact surface for grillables, the surface area of which amounts to 1 mm² to 1000 cm², particularly 20 mm² to 200 cm².

6. The electric grill (1) according to one of the preceding claims, **characterized in that** a grill plate (3, 4) comprises one plate segment (9 to 16) to one thousand plate segments (9 to 16), particularly two to one hundred plate segments (9 to 16), preferably two to ten plate segments (9 to 16).

7. The electric grill (1) according to one of the preceding claims, **characterized in that** a grill plate (3, 4) comprises at least two plate segments (9 to 16), wherein a separate heating device (17 to 24) is assigned to each of the two plate segments (9 to 16), and wherein the heating devices (17 to 24) of the plate segments (9 to 16) can be controlled independently of one another with respect to an operating state and/or a heating power and/or a heating time.

8. The electric grill (1) according to one of the preceding claims, **characterized in that** a sensor for detecting a displacement or a state of displacement of the plate segment (9 to 16) or for detecting the presence of grillables (5, 6) on a contact surface of the plate segment (9 to 16) is assigned to a plate segment (9 to 16).

9. The electric grill (1) according to claim 8, **characterized by** a control device that is designed for controlling a heating device (17 to 24) assigned to a plate segment (9 to 16) in dependence on a detection result of the sensor.

10. The electric grill (1) according to one of the preceding claims, **characterized in that** one of the grill plates (3, 4) protrudes over the other grill plate (4, 3) and/or plate base (8, 7) with an edge region in the closed state of the grilling space (2) such that liquid present in the grilling space (2) can drain off.

## Revendications

1. Gril électrique (1) avec deux plaques de gril (3, 4) opposées l'une à l'autre par leurs grandes surfaces de plaque, qui définissent ensemble un espace de grillage (2), dans lequel le gril (1) présente une première plaque de gril (3) pour le support des aliments à griller (5, 6) et une deuxième plaque de gril (4) pouvant être déplacée par rapport à la première plaque de gril (3), et dans lequel à chaque plaque de gril (3, 4) est associé une base de plaque (7, 8) qui maintient la plaque de gril (3, 4), dans lequel au moins une plaque de gril (3, 4) présente au moins un segment de plaque (9 à 16) qui est maintenu de manière mobile à la base de plaque (7, 8) et qui est déplaçable automatiquement par rapport à la base de plaque (7, 8) maintenant ce segment de plaque (9 à 16) en fonction de la taille et/ou de la forme d'un produit à griller (5, 6) introduit dans l'espace de grillage (2), **caractérisé en ce que** la plaque de gril (3, 4) présente plusieurs segments de plaque (9 à 16) qui peuvent être déplacés les uns par rapport aux autres et par rapport à la base de plaque associée (7, 8) à chacune.

2. Gril électrique (1) selon la revendication 1, **caractérisé en ce que** la base de plaque (7, 8) est en forme de pot, le segment de plaque (9 à 16) étant au moins partiellement déplaçable à l'intérieur de la base de plaque (7, 8).

3. Gril électrique (1) selon l'une des revendications précédentes, **caractérisé en ce qu'**un élément de rappel est associé au segment de plaque (9 à 16) qui maintient élastiquement le segment de plaque (9 à 16) à la base de plaque (7, 8).

4. Gril électrique (1) selon l'une des revendications précédentes, **caractérisé en ce qu'**un segment de plaque (13 à 16) de la deuxième plaque de gril (4) peut être déplacé par rapport à la base de plaque associée (8) en raison d'une force de pesanteur agissant sur le segment de plaque (13 à 16).

5. Gril électrique (1) selon l'une des revendications précédentes, **caractérisé en ce qu'**un segment de plaque (9 à 16) fournit une surface de contact pour un produit à griller, dont la taille de surface a une valeur de 1 mm² à 1000 cm², en particulier 20 mm² à 200 cm².

6. Gril électrique (1) selon l'une des revendications précédentes, **caractérisé en ce qu'**une plaque de gril (3, 4) présente un segment de plaque (9 à 16) à mille segments de plaque (9 à 16), en particulier deux à cent segments de plaque (9 à 16), de manière particulièrement préférée deux à dix segments de plaque (9 à 16).

7. Gril électrique (1) selon l'une des revendications précédentes, **caractérisé en ce qu'**une plaque de gril (3, 4) présente au moins deux segments de plaque (9 à 16), un dispositif de chauffage propre (17 à 24) étant associé à chacun des deux segments de plaque (9 à 16), les dispositifs de chauffage (17 à 24) des segments de plaque (9 à 16) pouvant être commandés indépendamment l'un de l'autre en ce qui concerne un état de fonctionnement et/ou une puissance de chauffage et/ou une durée de chauffage.

8. Gril électrique (1) selon l'une des revendications précédentes, **caractérisé en ce qu'**un capteur est associé à un segment de plaque (9 à 16) pour détecter un déplacement ou un état de déplacement du segment de plaque (9 à 16) ou pour détecter une présence de produit à griller (5, 6) au niveau d'une surface de contact du segment de plaque (9 à 16).

9. Gril électrique (1) selon la revendication 8, **caractérisé par** un dispositif de commande qui est conçu pour commander un dispositif de chauffage (17 à 24) associé à un segment de plaque (9 à 16) en fonction d'un résultat de détection du capteur.

10. Gril électrique (1) selon l'une des revendications précédentes, **caractérisé en ce que** l'une des plaques de gril (3, 4), par rapport à un état fermé de l'espace de grillage (2), déborde par une zone de bord sur l'autre plaque de gril (4, 3) et/ou la base de plaque (8, 7) de manière que du liquide présent dans l'espace de grillage (2) puisse s'écouler.
